# EUROPEAN PATENT APPLICATION

(11) **EP 3 098 018 A1**
(43) Date of publication of application: **30.11.2016**
(21) Application number: 16171274.0
(22) Date of filing: 25.05.2016
(51) Int. Cl.: B23K 26/08, B23K 26/38, B23K 37/047, B23K 26/70, B26D 7/20

(54) **SINGULATION CONVEYOR**

(30) Priority: 27.05.2015 US 201562167019 P
(71) Applicant: Preco, Inc., Somerset, WI 54025 (US)
(72) Inventor: NOELDNER, Kevin, Somerset, WI 54025 (US)
(74) Representative: Downing, Michael Philip

(57) **Abstract**

A laser processing system and method for cutting individual parts from a continuous moving web of substrate material. The laser system is configured to cleanly cut individual parts from a moving web without severing or damaging a supporting conveyor belt by partially processing the substrate as the substrate passes over a first conveyor belt comprising a plurality of individual belts spaced apart across the width of the web. The laser is directed to process the substrate according to gaps in the apparatus below the substrate, that is the laser is configured to process the substrate along a path wherein the substrate is passed over air rather than a physical support or conveyor. The finishing of the singulation of the individual part is completed by laser processing the web as it passes over a gap between a first conveyor and a second conveyor system.

## Description

### BACKGROUND

This disclosure relates to a laser processing system and more specifically to a laser processing system for removing, or singulating, individual parts from a sheet or web of material.

Laser beams are used in numerous applications, including drilling, machining, and cutting a variety of different films and materials. For example, laser processing of a moving web involves directing a focused beam onto the surface of the web of a film as the web is advanced. As the beam touches the surface of the moving web, the beam vaporizes and/or melts the web material.

Two-mirror systems, or galvos, (X-Y Cartesian systems are commonly used as well with lasers) are generally incorporated into a laser system for directing or redirecting the laser beam in a predetermined pattern to process a substrate. When laser processing a substrate to remove or otherwise cut an object from the substrate, a tooling plate for each individual part processed may be required. The tooling plate provides the material support and allows the laser to cut through the substrate for a clean cut without severing or damaging a supporting conveyor belt or conveying means and also to allow chads and other interior part features to be pulled from the web. The requirement of a tooling plate increases capital expense as well as changeover time. Along with this, the tooling plates need to be cleaned frequently, increasing machine downtime. Prior art methods include incorporating acrylic templates or honeycomb grids, which are most commonly used with step and repeat laser processing processes.

Alternatively, metal, knife edge or mesh conveyor belts have been incorporated into laser systems to support a web of substrate for laser processing. Although the expense and limited speed at which these webs are able to move through a system limits the processing speed and accuracy of prior art systems. The most common problem with metal conveyor belts is the belts will warp and have a limited life span. It is difficult to keep metal conveyor belts clean, as processed parts stick to the belt and the laser can mark the belt. The most common problem with the knife edge and mesh conveyors is remnant tick marks on the processed part and handling debris after the part is cut, such that is it difficult to keep the belt and the processed part clean. These conveyors will also warp.

Prior art methods of cutting substrates into individual parts generally also creates a larger amount of waste material. Parts are cut from a substrate leaving waste substrate behind on the web, such as a trim or border around each part. The trim may also be required to hold the substrate and parts together for moving the substrate through the laser processing system, where the waste substrate accumulates on a take-up roller.

### SUMMARY

The present disclosure relates to a laser processing system for cutting individual parts from a web of substrate material, wherein the laser is programmed and the system is configured to allow the individual parts to be cleanly cut from a moving web without damaging a conveyor system for moving and supporting the substrate material.

Another aspect of the present disclosure relates to a laser processing system for singulating a part from a continuously moving web of substrate material. The system comprises a laser beam or beams configured to cut the moving web of substrate material where the substrate material is fed to a first conveyor system which feeds the moving web of substrate material through a laser processing window for cutting one or more features of a part from the substrate. The laser is configured to at least partially cut or separate the part from the substrate by cutting the substrate between gaps in the first conveyor system, the gaps being oriented in a machine direction. A second conveyor system is configured to receive the web of substrate material from the first conveyor and the first and second conveyor systems cooperate to direct the substrate material through the laser processing system for singulation of parts from the substrate. Between the first and second conveyor systems is a gap positioned in the direction transverse to the machine direction. The laser is configured to singulate the partially processed part from the substrate over the second gap.

The first conveyor system may be a singulation conveyor comprising a plurality of individual conveyor belts moving in a machine direction. The individual conveyor belts are aligned generally in a parallel orientation along the machine direction and the belts are spaced apart to provide gaps for laser processing in the machine direction. It is over these gaps that the substrate is unsupported. The laser beam is directed to cut the substrate over the gaps, and to at least partially process the part for singulation as the substrate moves in the machine direction and over the singulation conveyor. The laser beam or beams are directed over a path corresponding to the gaps in the machine direction. The laser system is further controlled to complete singulation of the one or more parts at a downstream gap, the downstream gap being oriented transverse to the machine direction. The substrate and the singulated parts are then received directly by a second conveyor system, which may be a vacuum conveyor for substrate and part support as well as debris removal.

Yet another aspect of the present disclosure relates to a method for singulating one or more parts from a moving substrate with a laser processing system by providing a laser beam for processing a substrate and a laser control system for directing the laser beam along at least one laser processing path. The method further comprises directing a web of substrate through a first length of a laser processing window for partially processing an outer boundary of an individual part for singulation and subsequently passing the web of substrate over a second length of the laser processing window for finishing the processing of the outer boundary of the individual part for separating the part from the substrate. The first length of the laser processing window comprises at least one gap extending in the machine direction, and the laser is directed for cutting the part over the at least one gap. The second length of the laser processing window comprises a second gap extending in a direction transverse to the machine direction where the laser is configured to separate, or singulate, the part from the substrate over the second gap. The method further comprises passing the web and fully processed part to a vacuum conveyor for separating the singulated part from the substrate.

The second laser processing window may be positioned over an open space between the first processing window and the vacuum conveyor and the first laser processing window may be positioned over a space comprising a plurality of individual conveyor belts and corresponding spaces between the individual belts.

### BRIEF DESCRIPTION OF THE DRAWINGS

FIG. 1 is a schematic view of a laser processing system for laser processing a roll of material on the fly according to the present disclosure.
FIG. 2 is a side perspective view of a singulation conveyor for the laser processing system.

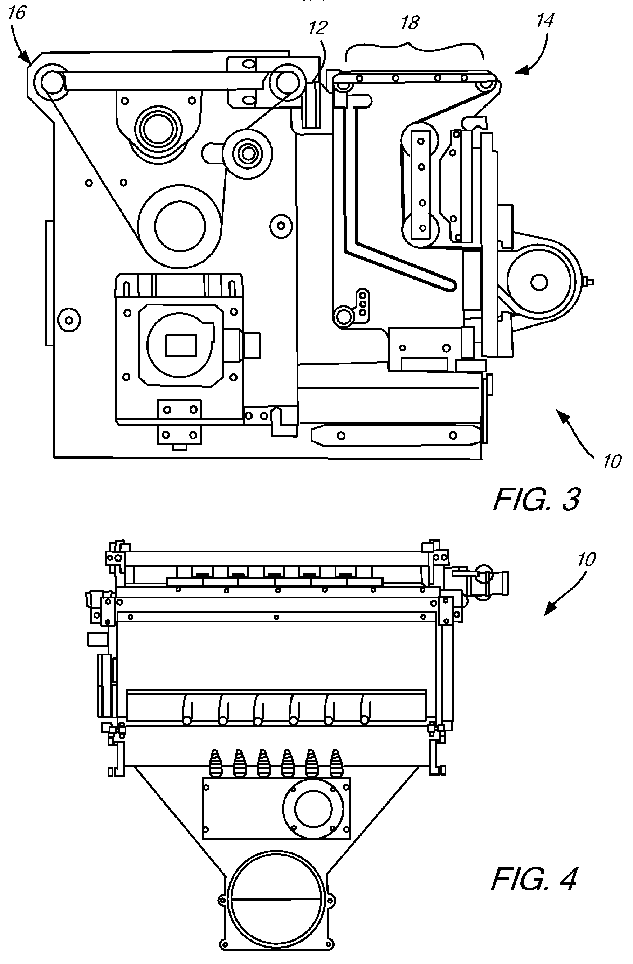

FIG. 3 is a side sectional view of the singulation conveyor illustrating a belt path and tensioning mechanism.
FIG. 4 is an exploded view of the singulation conveyor.
FIG. 5 is a flow chart illustrating a method of laser processing a roll of material on the fly.

### DETAILED DESCRIPTION

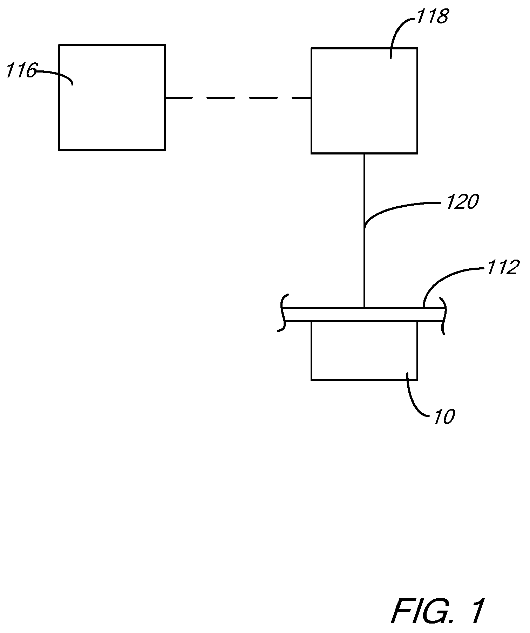

As illustrated in FIG. 1, the present disclosure is directed to a laser processing system 110 and method for laser processing a roll of material 112 on the fly while singulating individual parts 114 from the roll of material. As used throughout this disclosure, the term singulating generally means a part or parts separated from a larger array of conjoined parts; or a continuous part separated into individual parts or pieces. As relates to the present disclosure, a substrate 112 is singulated into a plurality individual parts 114 where there is little or no left over substrate or substrate waste. The parts are separated from the substrate without a "trim". That is, there is substantially no substrate waste in the form of a trim or unused strip between individual parts. In some applications, there may be limited substrate waste due to the selected shape of the singulated parts. For example, waste can be reduced but not likely eliminated between two parts having curved edges and no common line cut, but

The system 110 of this disclosure comprises a controller 116 and a laser processing system 118 producing one or more laser beams 120 and the system adapted to cut individual parts from a substrate over a vacuum without damaging a supporting web or conveyor system. Parts are singulated, or separated, from the substrate 112 while the substrate is conveyed through the laser processing system 118 by a series of singulation conveyors 10. The singulation conveyors 10 are positioned within the processing area, also referred to as a cutting area, of the laser processing system 118 and comprise a plurality of individual conveyors positioned across a web, in parallel orientation, and having a gap, or an open space between each conveyor, the gaps extending in the machine direction.

This disclosure is further directed to a laser processing system 118 and method that is used to process individual parts 114 continuously on a moving web of substrate 112, where the individual parts 114 are cut from the substrate 112. As used throughout this disclosure, the terms "web" or "moving web" refer to a continuously moving substrate, the substrate moving in the machine direction simultaneously while the laser is directed for laser processing. The substrate may be a continuous roll of material or sheets of material, wherein the sheets are processed while continuously moving along the web, in the machine direction. The terms "material" and "substrate" are used interchangeably throughout this disclosure and refer to the work piece for laser processing.

The materials processed according to embodiments disclosed herein can be any type of single layer, multi-layer or extruded film, fabric, or any other substrate or material in which parts are to be singulate, cut, shaped or otherwise fabricated. This system may also effectively be used to cut larger sheets for subsequent processing, as the larger sheets are singulated form a continuous roll of the material.

The laser processing system 118 comprises the singulation conveyor system 10 illustrated generally at FIG. 1 which allows a web of material to be fed from a nip roller, the nip roller positioned upstream of the laser processing area and through the system 10. The nip roller pulls or otherwise unrolls or unwinds the substrate for processing from a supply roll of substrate and a conveyor system guides the substrate through the laser processing system 118 and conveyor system 10. The system 10 includes a processing conveyor 14 and an exit conveyor 16 positioned down-web (downstream in the machine direction) from the processing conveyor 14. A gap or open space 12 is positioned directly between, and separates, the processing conveyor 14 from the exit conveyor 16. The gap 12 is positioned transverse to the machine direction, extending across a width of the processing area.

The processing conveyor 14 is positioned within and below a laser processing window 18 which is configured for at least partially processing a part or parts. The processing conveyor 14 comprises a plurality of individual conveyor belts 20 and width spacing, or gaps 21 there between. The individual conveyor belts 20 of the processing conveyor are collectively referred to as the processing, or singulation, conveyor 14. The belts 20 may be any type of flexible conveyor belt material, including a mesh or perforated belt for air flow. The individual belts 20 are supported by individual drive shaft assemblies. The laser system may comprise any number of individual belts 20 in the singulation conveyor 14, the amount of belts incorporated being sufficient to extend across the web width, transverse to the machine direction, with spaces 21 appropriate for a specific singulation part geometry and/or as required by additional laser processing variables.

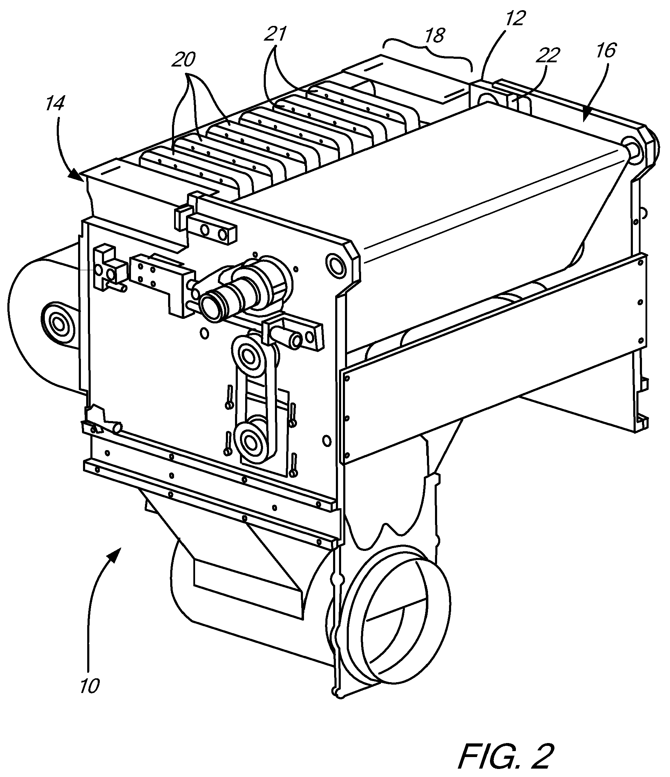

The embodiment illustrated in FIG. 2 incorporates six individual conveyors 20. The singulation conveyor 14 has a length in the machine direction sufficient for part processing and substantially equal to the first laser processing window 18. The conveyors 20 and spaces 21 extend longitudinally in the machine direction and terminate just prior to the gap 12, which is positioned transverse to the open spaces 21. The plurality of singulation belts 20 and spaces 21 alternate across the web width such that the conveyors 18 are positioned adjacent to one another in a direction extending across the web with the open spaces 21 therebetween (e.g. transverse to the machine direction/direction of travel).

The gap 12 is positioned near a terminal end of the singulation conveyor 14 and just up-web from the exit conveyor 15. The gap 12 is positioned substantially directly below a laser processing area 22, the second laser processing area 22 configured for singulating the part by the final laser cut. Processing area 22 is a fixed position area, such that the laser is directed to make a final cut which singulates the part from the substrate when the laser is directed over the gap 12. Web tension from the singulation conveyor 14 in cooperation with the web tension from the exit conveyor 16 allow the substrate to pass over the gap 12 without a conveyor below the substrate while maintaining the partially processed part and substrate flat for processing. The gap 12 is of a length sufficient to allow the laser to finish processing the part or parts and to make the final cuts for singulation without severing or damaging a conveyor belt from either the singulation conveyor or the exit conveyor. A laser control program or a system configured for directing the laser or laser beams according to selected processing paths includes a fixed window or line for final processing of the part which is positioned within the gap 12.

The exit conveyor 16 may include a vacuum belt 24 that is further configured to remove physical debris and to provide suction in a downward direction to hold the web of material taught and flat while allowing for separation of the singulated part or parts.

The singulation conveyor 14 pulls the web of material from the nip roll 26 and feeds the material into and through the cutting area 18. The exit conveyor 16 also pulls the substrate through the finishing area 22. While in the cutting area 18, the laser, or alternatively, a plurality of laser beams, is/are configured to process outer edges or boundaries of the part or multiple parts to be singulated from the web of substrate. The laser is configured to cut the substrate at locations on the substrate positioned above the singulation conveyors and in a space or spaces between adjacent singulation conveyors. The focal point of the laser, when configured to process the substrate, is passed over a processing path where cutting of the substrate occurs substantially primarily over the gap and open spaces. That is, the substrate is not cut at points where the substrate is substantially directly over a conveyor belt. The laser is directed to make at least one cut over at least a first gap, the first gap positioned in the machine direction and to make at least one subsequent cut over a second gap, the second gap positioned in a direction transverse to the machine direction.

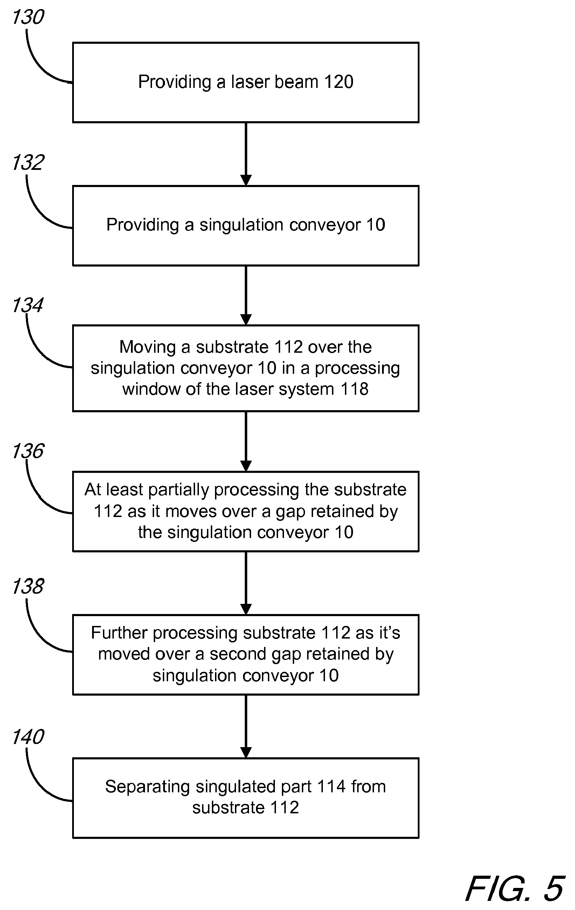

The result is a partially processed or cut part, which is further fed through the system in the machine direction and conveyed through the cutting area 18 to the finishing area 22 where a final laser cut is made and the substrate and singulated part are directed to the exit conveyor 16. Once the web and partially processed part or parts have reached the gap 12, it is within the width and along the length of this gap, without a conveyor below directly below the gap 12, that the part is finally singulated from the substrate. Singulating individual parts 114 from the moving substrate 112 can be done according to a combination of steps 130, 132, 134, 136, 138, and 140 as illustrated generally in FIG. 5 or modifications in substance or order and/or repetitions of the steps as described throughout this disclosure. The individual parts 114 are finished by a final separating cut wherein the laser is directed such that a part or parts is/are cut from a moving substrate without severing or otherwise damaging a system of conveyors feeding the substrate through the laser processing system.

Optimization of the control of the laser beam or beams allows the laser(s) to be directed to finally singulate the part at precise locations. The optimization software for the laser controlling program is described in co-filed U.S. patent application Serial No. ______, the co-filed application having Attorney Docket Nos. P187.0057US1. The laser is configured to allow for movement according to the geometry of the part to set points along the machine direction for partially processing the part to optimize where each individual feature or cut of the part is processed, while also allowing the cut-off location to remain fixed within the gap as the gap 12 is generally small, for example, approximately 1 inch in the machine direction. The gap may be smaller or bigger depending on factors including roller configuration and/or laser configuration or selected part shape.

The singulation vacuum belts 20 are also adjustable to various positions across the web, in a "side to side" manner such that the width of the space 21 between each belt is adjustable. This allows the laser system to accommodate different part shapes having various shapes and/or widths. The individual conveyors may be selectively removed to further accommodate different quantities of parts to be processed across the width of the machine or different web sizes.

Although the present disclosure has been described with reference to preferred embodiments, workers skilled in the art will recognize that changes may be made in form and detail without departing from the spirit and scope of the disclosure.

## Claims

1. A method for singulating a part from a moving substrate with a laser processing system, the method comprising:
providing a laser beam for processing a substrate;
at least partially processing the substrate as it moves over a first gap, the first gap comprising at least one open space extending in a machine direction;
subsequently processing the substrate as it moved over a second gap, the second gap extending in a direction transverse to the machine direction to singulate a part from the substrate;
moving the substrate and singulated part to a vacuum conveyor for separating the singulated part from the substrate.

2. The method of claim 1, wherein a controller is configured to direct the laser beam for processing the substrate along a selected path which includes processing the substrate over the gaps to avoid damaging a conveyor belt configured to move the substrate through the laser processing system.

3. The method of claim 1, wherein at least a portion of an outer boundary of the part is processed when the substrate is moving over the first gap.

4. The method of claim 1 or 3, wherein a final portion of the outer boundary of the part is processed when the substrate is moving over the second gap.

5. The method of claim 1, wherein the first gap comprises a plurality of individual conveyor belts and corresponding spaces between the individual belts all extending in the machine direction.

6. The method of claim 1 or 5, wherein the second gap is positioned over an open space between the first gaps and a vacuum conveyor.

7. A laser processing system for singulating a part from a continuously moving web of material, the system comprising:
a laser beam configured for cutting a part from a continuously moving substrate;
a first conveyor system configured to feed the moving substrate through the laser processing system, the conveyor system comprising a plurality of conveyor belts and at least one gap between the conveyor belts and extending in a machine direction;
a second conveyor system configured to receive the web from the first conveyor system; and
wherein the first conveyor and the second conveyor are separated by a gap positioned transverse to the machine direction.

8. The laser processing system of claim 7, wherein the first conveyor system is a singulation conveyor comprising a plurality of individual conveyor belts and drive mechanisms for moving the substrate in a web direction.

9. The laser processing system of claim 7 or 8, wherein the plurality of conveyor belts are aligned in parallel orientation along the web direction and are each separated from an adjacent belt by one of the at least one gaps and extending in the machine direction.

10. The laser processing system of claim 9, wherein the laser beam is configured to partially process the part moving over the first conveyor system, the path corresponding to the gaps in the machine direction.

11. The laser processing system of claim 7, wherein the laser beam is configured to partially process a part when the part is moving over the first conveyor system.

12. The laser processing system of claim 7, wherein the laser processing window has a length extending substantially the length of the first conveyor system and the length of the gap.

13. The laser processing system of claim 12, wherein the laser beam is configured to fully process the part moving as the part moved over the gap extending in a direction transverse to the machine direction.

14. The laser processing system of claim 7, wherein the second conveyor system is a vacuum conveyor.

15. The laser processing system of claim 7, wherein the laser is directed to singulate a part as the substrate moves in the machine direction such that the part is singulated by a laser path extending along a boundary of the part and over the machine direction gaps and terminating in the gap transverse to the machine direction, such that no conveyor belts are positioned directly below the substrate along the laser processing path.
